# EUROPÄISCHE PATENTSCHRIFT

(11) **EP 3 083 116 B1**
(45) Veröffentlichungstag und Bekanntmachung des Hinweises auf die Patenterteilung: **09.10.2019**
(21) Anmeldenummer: 14812557.8
(22) Anmeldetag: 17.12.2014
(51) Int. Cl.: B23B 51/04

(54) **BOHRKRONE MIT EINEM AUSTAUSCHBAREN SCHNEIDABSCHNITT**
ANNULAR DRILL BIT WITH A REPLACEABLE CUTTING SECTION
TRÉPAN DOTÉ D'UNE SECTION DE COUPE INTERCHANGEABLE

(30) Priorität: 20.12.2013 EP 13198954
(43) Veröffentlichungstag der Anmeldung: 26.10.2016
(73) Patentinhaber: Hilti Aktiengesellschaft, 9494 Schaan (LI)
(72) Erfinder: HOOP, Matthaeus, LI-9492 Eschen (LI)
(74) Vertreter: Hilti Aktiengesellschaft Corporate Intellectual Property
(86) Internationale Anmeldenummer: PCT/EP2014/078140
(87) Internationale Veröffentlichungsnummer: WO 2015/091601

(56) Entgegenhaltungen:
- JP-U- H0 290 006
- JP-U- H0 636 805
- US-A- 3 880 546
- US-A- 5 655 613
- US-A1- 2004 154 837
- US-A1- 2005 260 048
- US-A1- 2006 159 531
- US-A1- 2007 036 620
- US-A1- 2010 080 665
- US-A1- 2013 127 123

## Beschreibung

### Technisches Gebiet

Die vorliegende Erfindung betrifft eine Bohrkrone mit einem austauschbaren Schneidabschnitt gemäß dem Oberbegriff des Anspruchs 1. Eine solche Bohrkrone ist aus der JP H02 90006 U bekannt.

Unter dem Begriff "Bohrkrone" werden sämtliche Bohrwerkzeuge zusammengefasst, die einen hohlen, zylindrischen Bohrschaft und einen Schneidabschnitt mit einem oder mehreren Schneidelementen aufweisen, beispielsweise Kernbohrkronen und Dosensenker. Abhängig vom Einsatzzweck können die Bohrkronen zusätzliche Elemente, wie beispielsweise einen Tiefenanschlag, der die Bohrtiefe begrenzt, aufweisen.

### Stand der Technik

Bohrkronen bestehen aus einem Schneidabschnitt mit einem oder mehreren Schneidelementen, einem Bohrschaftabschnitt und einem Aufnahmeabschnitt mit Einsteckende. Die Bohrkrone wird über das Einsteckende in der Werkzeugaufnahme eines Bohrgerätes befestigt und im Bohrbetrieb vom Bohrgerät um eine Drehachse angetrieben und entlang einer Bohrrichtung, die parallel zur Drehachse verläuft, in einen zu bearbeitenden Untergrund bewegt. Bohrkronen lassen sich in Bohrkronen mit einem austauschbaren Bohrkronenabschnitt und Bohrkronen ohne austauschbaren Bohrkronenabschnitt unterteilen. Dabei werden unter dem Begriff "Bohrkronenabschnitt" die einzelnen Abschnitte der Bohrkrone, die als Schneidabschnitt, Bohrschaftabschnitt oder Aufnahmeabschnitt ausgebildet sein können, zusammengefasst.

Aus dem Stand der Technik sind verschiedene Bohrkronen mit einem austauschbaren Bohrkronenabschnitt bekannt, wobei der Schneidabschnitt, der Aufnahmeabschnitt oder der Schneid- und Aufnahmeabschnitt austauschbar ausgebildet sein können. Bei Bohrkronen mit einem austauschbaren Bohrkronenabschnitt muss die Verbindung zwischen den Bohrkronenabschnitten die, im Bohrbetrieb auftretenden, Kräfte und Drehmomente übertragen. Neben der Kraft- und Drehmomentübertragung muss die Verbindung der auftretenden Zugbelastung beim Entfernen der Bohrkrone aus dem Untergrund standhalten, wobei die Zugbelastung besonders hoch ist, wenn sich die Bohrkrone im Untergrund verklemmt hat. Die Eigenschaft, der Zugbelastung standzuhalten, wird auch als Abziehsicherung bezeichnet.

Bei Bohrkronen mit einem austauschbaren Bohrkronenabschnitt kann die Verbindung zwischen den Bohrkronenabschnitten als lösbare oder nicht-lösbare Verbindung ausgebildet sein. Bei einer lösbaren Verbindung kann die Verbindung zerstörungsfrei gelöst werden, wogegen die Verbindung bei einer nicht-lösbaren Verbindung nur durch Zerstörung der Verbindungsmittel gelöst werden kann. Beispiele für lösbare Verbindungen sind eine Steckverbindung, Schraubverbindung oder Magnetverbindung und Beispiele für nicht-lösbare Verbindungen sind eine Lötverbindung, Schweißverbindung, Nietverbindung oder Klebeverbindung.

Nicht-lösbare Verbindungen eignen sich vor allem für Bohrkronen, bei denen ein abgenutzter Schneidabschnitt ausgetauscht werden soll, wohingegen lösbare Verbindungen bei einem häufigeren Austausch des Bohrkronenabschnittes Vorteile gegenüber nicht-lösbaren Verbindungen besitzen. Wenn eine Bohrkrone mit verschiedenen Bohrgeräten verbunden werden soll, muss das Einsteckende an die Werkzeugaufnahme des Bohrgerätes angepasst sein. Für derartige Anwendungen eignen sich lösbare Verbindungen, die der Bediener auf der Baustelle öffnen und schließen kann.

Bei einer lösbaren Verbindung zwischen den Bohrkronenabschnitten kann ein unbeabsichtigtes Lösen eines Bohrkronenabschnittes auftreten, vor allem dann, wenn sich die Bohrkrone während des Bohrens im Untergrund verklemmt hat. Beim Kernbohren kommt es regelmäßig dazu, dass sich die Bohrkrone während des Bohrens im Untergrund verklemmt und vom Bediener gelöst werden muss. Zum Lösen der verklemmten Bohrkrone wird bei ständergeführten Kernbohrgeräten die Bohrkrone entgegen der Drehrichtung angetrieben und vom Bohrständer eine Zugkraft, die der Bohrrichtung entgegen gerichtet ist, auf die Bohrkrone ausgeübt. Der Bediener versucht die Bohrkrone durch manuelles Drehen mit Hilfe eines Werkzeugschlüssels und gleichzeitiges Ziehen mit Hilfe des Bohrständers aus dem Untergrund zu befreien.

EP 0 428 476 A1 offenbart eine Bohrkrone mit einem austauschbaren Schneidabschnitt, der über eine kombinierte Steck- und Lötverbindung mit dem Bohrschaftabschnitt verbunden wird. Der Schneidabschnitt weist ein äußeres Steckelement und der Bohrschaftabschnitt ein komplementär ausgebildetes inneres Steckelement auf, die ineinander gesteckt und miteinander verlötet werden. Das innere Steckelement ist um 2 bis 10 % länger als das äußere Steckelement ausgebildet und liegt mit einer Stirnfläche an einer Anlagefläche des äußeren Steckelementes an. Zwischen den ineinander gesteckten Steckelementen besteht ein Spalt, der mit einem Lot gefüllt wird. Durch Erwärmen der Steckelemente schmilzt das Lot und es bildet sich eine Lötverbindung zwischen den Steckelementen. Die Kraftübertragung vom Bohrschaftabschnitt auf den Schneidabschnitt erfolgt über die Stirn- und Anlageflächen der Steckelemente und die Drehmomentübertragung erfolgt über die Lötverbindung.

Bohrkronen mit einer Lötverbindung weisen den Nachteil auf, dass zum Zerstören der Lötverbindung und zum Erstellen einer neuen Lötverbindung ein Lötgerät und Know-how beim Löten erforderlich ist. Daher eignen sich diese Bohrkronen nicht für einen schnellen Austausch des Schneidabschnittes auf der Baustelle. Außerdem besteht die Gefahr, dass die Verbindungen der Schneidelemente, die häufig verlötet oder verschweißt sind, durch das Erwärmen der Steckelemente beim Löten des Schneidabschnittes beeinträchtigt werden. Um sicherzustellen, dass die Wärmeeinflusszone beim Löten der Steckelemente die Schneidelemente nicht erfasst, muss der Schneidabschnitt eine entsprechende Höhe aufweisen, wobei das zusätzliche Material höhere Kosten und Gewicht bedeutet.

DE 196 50 718 A1 offenbart eine Bohrkrone, bei der ein austauschbarer Schneidabschnitt über eine Klebeverbindung mit dem Bohrschaftabschnitt verbunden wird. Der Schneidabschnitt und der Bohrschaftabschnitt weisen komplementär ausgebildete Steckelemente auf, die ineinander gesteckt werden. Zwischen die Kontaktflächen der Steckelemente wird ein Kleber eingebracht, der die beiden Bohrkronenabschnitte stoffschlüssig miteinander verbindet. Die Klebeverbindung muss so ausgestaltet sein, dass die verklebten Kontaktflächen das erforderliche Drehmoment übertragen können und außerdem der Zugbelastung beim Entfernen einer verklemmten Bohrkrone standhalten. Die Demontage eines abgenutzten Schneidabschnittes erfolgt durch Erwärmen der Klebeverbindung auf ca. 300 °C, wodurch der Kleber zerstört wird. Die Klebeverbindung eignet sich nur für Bohranwendungen, bei denen die auftretenden Temperaturen deutlich unterhalb von 300 °C liegen. Beim Trockenbohren von sehr harten Materialien, bspw. Marmor, kann sich die Bohrkrone stark erhitzen, wodurch die Klebeverbindung zerstört oder zumindest beeinträchtigt werden kann. Nachteilig ist außerdem, dass zum Erstellen einer neuen Klebeverbindung spezielle Materialien und Werkzeuge sowie Know-how beim Kleben erforderlich sind. Nur wenn die Klebeverbindung ordnungsgemäß hergestellt wurde, können die verklebten Kontaktflächen das erforderliche Drehmoment übertragen und der Zugbelastung beim Entfernen einer verklemmten Bohrkrone standhalten.

DE 10 2009 010 340 A1 offenbart eine weitere Bohrkrone mit einem austauschbaren Schneidabschnitt, der über eine nicht-lösbare Verbindung mit dem Bohrschaftabschnitt verbunden ist. Am Bohrschaftabschnitt und Schneidabschnitt sind Formschlussprofile vorgesehen, die komplementär ausgebildet sind und ineinander greifen können. Die Kraftübertragung und Drehmomentübertragung vom Bohrschaftabschnitt auf den Schneidabschnitt erfolgt über die Formschlussprofile. Die Abziehsicherung wird über mehrere stoffschlüssige Verbindungspunkte oder Verbindungsbereiche realisiert.

DE 85 12 878 U1 offenbart eine Bohrkrone mit einem austauschbaren Aufnahmeabschnitt, der über eine Bajonett-Verbindung lösbar mit dem Bohrschaftabschnitt verbunden wird. Am Bohrschaftabschnitt sind zwei schlitzförmige Ausnehmungen in L-Form vorgesehen, in die zwei, am Aufnahmeabschnitt angeordnete, Stiftelemente eingeführt werden. Die schlitzförmigen Ausnehmungen sind im Endbereich abgewinkelt und weisen eine geringe Neigung auf, so dass sich die Stiftelemente in den Endbereichen festklemmen. Zum Öffnen der Bajonett-Verbindung ist die Handkraft ausreichend. Die Kraft- und Drehmomentübertragung vom Aufnahmeabschnitt auf den Bohrschaftabschnitt erfolgt über die Stiftelemente.

Die Anforderungen hinsichtlich Kraftübertragung und Drehmomentübertragung zwischen zwei Bohrkronenabschnitten sind unabhängig von der Position der lösbaren Verbindung. Das Problem des unbeabsichtigten Lösens eines Bohrkronenabschnittes tritt nur bei austauschbaren Schneidabschnitten auf, da sich die lösbare Verbindung im Bohrbetrieb im Untergrund befindet und für den Bediener nicht sichtbar ist. Wenn sich bei der bekannten Bohrkrone mit austauschbarem Aufnahmeabschnitt die Bajonett-Verbindung gelöst hat, kann der Aufnahmeabschnitt jederzeit unter Sichtkontrolle mit dem Bohrschaftabschnitt verbunden werden.

US 3,888,320 A offenbart eine Bohrkrone mit einem austauschbaren Schneidabschnitt, der über eine lösbare Steck-Dreh-Verbindung mit dem Bohrschaftabschnitt verbunden ist. Der Schneidabschnitt umfasst einen Ringabschnitt, der an einem ersten Ende mit mehreren Schneidelementen verbunden ist und an einem zweiten Ende ein äußeres Steckelement und eine ringförmige Anschlagschulter aufweist. Der Bohrschaftabschnitt umfasst einen zylinderförmigen Bohrschaft, der an einem, dem Schneidabschnitt zugewandten Ende ein inneres Steckelement mit einer Stirnfläche aufweist. Die Steckelemente bilden in einer Steckrichtung parallel zur Drehachse eine Steckverbindung. Das äußere Steckelement weist an der Innenseite mehrere Stiftelemente auf, die in einer Ebene senkrecht zur Drehachse radial nach innen gerichtet sind. Das innere Steckelement weist an der Außenseite mehrere schlitzförmige Ausnehmungen in L-Form auf, in die die Stiftelemente eingeführt werden. Die Drehmomentübertragung vom Bohrschaftabschnitt auf den Schneidabschnitt erfolgt über die Stiftelemente. Die L-förmigen Ausnehmungen bestehen aus einem Querschlitz, der senkrecht zur Drehachse verläuft, und einem Verbindungsschlitz, der parallel zur Drehachse verläuft und den Querschlitz mit einer Unterkante des inneren Steckelementes verbindet. Das innere Steckelement mit der Stirnfläche und die schlitzförmigen Ausnehmungen bilden eine erste Verbindungseinrichtung, das äußere Steckelement mit der Anschlagschulter und die Stiftelemente bilden eine zweite Verbindungseinrichtung. Im verbundenen Zustand bilden die erste und zweite Verbindungseinrichtung die lösbare Steck-Dreh-Verbindung zwischen dem Schneidabschnitt und dem Bohrschaftabschnitt und mittels der ersten und zweiten Verbindungseinrichtung erfolgen die Kraft- und Drehmomentübertragung vom Bohrschaftabschnitt auf den Schneidabschnitt.

Der Bohrschaftabschnitt ist von einer Rückstellfeder umgeben, die zwischen dem Aufnahmeabschnitt und dem Schneidabschnitt eingespannt ist. Wenn eine Kraft in Bohrrichtung auf den Bohrschaftabschnitt einwirkt, wird die Rückstellfeder komprimiert und der Bohrschaftabschnitt in Bohrrichtung bewegt, bis die Stirnfläche des Bohrschaftabschnittes an der Anschlagschulter des Schneidabschnittes anliegt. Im entlasteten Zustand, d.h. ohne Krafteinwirkung in Bohrrichtung, besteht zwischen dem Schneidabschnitt und dem Bohrschaftabschnitt in Bohrrichtung ein axialer Spalt. Als Abziehsicherung, die ein unbeabsichtigtes Lösen des Schneidabschnittes verhindern soll, weist der Querschlitz eine Hinterschneidung auf, die das Stiftelement im entlasteten Zustand aufnimmt. Die Abziehsicherung verhindert zuverlässig, dass sich der Schneidabschnitt beim Entfernen der Bohrkrone aus dem Untergrund löst. Probleme treten allerdings auf, wenn sich die Bohrkrone im Untergrund verklemmt hat und vom Bediener gelöst werden muss. Wenn der Bediener eine Kraft auf den Bohrschaftabschnitt ausübt und den Bohrschaftabschnitt entgegen der Drehrichtung bewegt, kann das Stiftelement aus der Hinterschneidung bewegt werden. Sobald das Stiftelement die Hinterschneidung verlassen hat und sich im Querschlitz befindet, unterstützt die Rückstellfeder das Lösen der Steck-Dreh-Verbindung.

### Darstellung der Erfindung

Die Aufgabe der vorliegenden Erfindung besteht darin, eine Bohrkrone mit einem austauschbaren Schneidabschnitt zu entwickeln, bei der das Risiko reduziert ist, dass sich die lösbare Verbindung zwischen dem Bohrschaftabschnitt und dem Schneidabschnitt beim Entfernen einer verklemmten Bohrkrone aus dem Untergrund unbeabsichtigt öffnet und der Bohrschaftabschnitt ohne den Schneidabschnitt aus dem Untergrund entfernt wird.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass der Schneidabschnitt eine, von der ersten Verbindungseinrichtung verschiedene, dritte Verbindungseinrichtung und der Bohrschaftabschnitt eine, von der zweiten Verbindungseinrichtung verschiedene, vierte Verbindungseinrichtung aufweisen, wobei die dritte und vierte Verbindungseinrichtung im verbundenen Zustand in einer axialen Richtung parallel zur Drehachse eine formschlüssige Verbindung zwischen dem Schneidabschnitt und dem Bohrschaftabschnitt bilden.

Als axiale Richtung ist eine Richtung parallel zur Drehachse der Bohrkrone definiert. Im verbundenen Zustand der Bohrkronenabschnitte fällt die Drehachse der Bohrkrone mit den Längsachsen der Bohrkronenabschnitte, Schneidabschnitt und Bohrschaftabschnitt, zusammen. Als radiale Ebene ist eine Ebene senkrecht zur Drehachse definiert und eine radiale Richtung ist eine Richtung, die in der radialen Ebene verläuft und die Drehachse bzw. Längsachse des Bohrkronenabschnittes schneidet.

Die erste und zweite Verbindungseinrichtung bilden im verbundenen Zustand eine lösbare Verbindung zwischen dem Schneidabschnitt und dem Bohrschaftabschnitt, wobei die Kraftübertragung und Drehmomentübertragung vom Bohrschaftabschnitt auf den Schneidabschnitt mittels der ersten und zweiten Verbindungseinrichtung erfolgen. Die Idee der vorliegenden Erfindung besteht darin, mittels der dritten und vierten Verbindungseinrichtung eine Abziehsicherung zu realisieren, die bei einer verklemmten Bohrkrone ein unbeabsichtigtes Abziehen des Bohrschaftabschnittes vom Schneidabschnitt erschwert. Dadurch, dass die dritte und vierte Verbindungseinrichtung von der ersten und zweiten Verbindungseinrichtung verschieden ist, kann das Risiko eines unbeabsichtigten Lösens weiter reduziert werden.

Erfindungsgemäß weisen die dritte und vierte Verbindungseinrichtung eine Nase und eine Nut auf, wobei die Nase in die Nut bewegbar ist. Die Ausbildung der dritten und vierten Verbindungseinrichtung als Nase und Nut erlaubt eine einfache und zuverlässige Verbindung, die ein Abziehen des Bohrschaftabschnittes vom Schneidabschnitt erschwert. Die Haltekraft der Verbindung lässt sich über die Geometrie der Nase und Nut an das Einsatzgebiet der Bohrkrone anpassen.

Erfindungsgemäß umfassen der erste und zweite Bohrkronenabschnitt ein inneres Steckelement und ein äußeres Steckelement, wobei das innere und äußere Steckelement im verbundenen Zustand eine Steckverbindung bilden. Dabei sind die Bohrkronenabschnitte über die Steckelemente in allen Richtungen senkrecht zur Drehachse formschlüssig verbunden. Als Steckverbindung wird eine Verbindung bezeichnet, bei der zwei Steckelemente entlang einer Steckrichtung bewegt werden und in mindestens einer Richtung eine formschlüssige Verbindung bilden. Eine Steckverbindung mit einem inneren Steckelement und einem äußeren Steckelement lässt sich vom Anwender leicht öffnen und schließen. Außerdem können die Bohrkronenabschnitte, die über die Steckelemente verbunden werden, zueinander ausgerichtet werden.

Erfindungsgemäß liegt eine Stirnfläche des inneren Steckelementes im verbundenen Zustand an einer Anschlagschulter des äußeren Steckelementes an. Die Kraftübertragung vom Bohrschaftabschnitt auf den Schneidabschnitt erfolgt beim Bohren über die Stirnfläche und die Anschlagschulter. Die Gefahr einer Verformung des äußeren Steckelementes ist reduziert, wenn die Kraftübertragung nicht über Stiftelemente erfolgt, so dass die erfindungsgemäße Bohrkrone eine höhere Stabilität aufweist. Die Anschlagschulter kann ringförmig oder ringabschnittsförmig ausgebildet sein. Durch eine plane Auflage der Stirnfläche an einer ringförmigen Anschlagschulter ist die Bohrkrone an der Innenseite dicht ausgebildet, so dass die Fehlleitung eines Kühl- und Spülmediums verhindert wird. Das beispielsweise über das Einsteckende der Bohrkrone zugeführte Kühl- und Spülmedium strömt vollständig an die Bearbeitungsstelle und sorgt für eine Kühlung der Schneidelemente und einen Abtransport von Bohrklein.

Erfindungsgemäß sind das äußere Steckelement am Schneidabschnitt und das innere Steckelement am Bohrschaftabschnitt vorgesehen. Das äußere Steckelement wird an der Außenseite vom Untergrund abgenutzt. Daher ist es vorteilhaft, das stärker belastete Steckelement am austauschbaren Schneidabschnitt anzuordnen.

Erfindungsgemäß weisen die erste und zweite Verbindungseinrichtung mindestens ein Stiftelement und mindestens eine schlitzförmige Ausnehmung auf, wobei das Stiftelement in die schlitzförmige Ausnehmung bewegbar ist. Im verbundenen Zustand der Bohrkronenabschnitte erfolgt mittels des Stiftelementes und der schlitzförmigen Ausnehmung eine Drehmomentübertragung vom Bohrschaftabschnitt auf den Schneidabschnitt.

Erfindungsgemäß ist das mindestens eine Stiftelement an einer Außenseite des inneren Steckelementes angeordnet und das äußere Steckelement weist die mindestens eine schlitzförmige Ausnehmung auf. Der Bohrkronenabschnitt, der die schlitzförmigen Ausnehmungen aufweist, ist anfälliger gegenüber einer Verformung durch Zugbelastung als der Bohrkronenabschnitt, an dem die Stiftelemente angeordnet sind. Da der Durchmesser des äußeren Steckelementes grösser als der Durchmesser des inneren Steckelementes ist, steht am äußeren Steckelement mehr Umfang für die schlitzförmigen Ausnehmungen zur Verfügung bzw. der Anteil der schlitzförmigen Ausnehmungen am Umfang ist geringer. Die Bohrkrone ist stabiler, wenn die schlitzförmigen Ausnehmungen am äußeren Steckelement vorgesehen sind. Außerdem lässt sich die mittels Nase und Nut umgesetzte Abziehsicherung aufgrund der Zugänglichkeit vom Bediener mittels eines handelsüblichen Werkzeuges leichter lösen, wenn die schlitzförmigen Ausnehmungen im äußeren Steckelement vorgesehen sind. Die Anordnung der schlitzförmigen Ausnehmungen im inneren Steckelement erfordert zum Lösen ein Spezialwerkzeug und die Zugänglichkeit an der Innenseite ist eingeschränkt, wenn sich der Bohrkern im Bohrschaft verklemmt hat.

Die mindestens eine schlitzförmige Ausnehmung durchdringt das äußere Steckelement in radialer Richtung vollständig. Bei der erfindungsgemäßen Bohrkrone weisen die dritte und vierte Verbindungseinrichtung die Nase und Nut auf, wobei die formschlüssige Verbindung im verbundenen Zustand ein Abziehen des Bohrschaftabschnittes vom Schneidabschnitt erschwert. Damit die Verbindung zwischen Nase und Nut vom Bediener gelöst werden kann, wird das äußere Steckelement durch die schlitzförmigen Ausnehmungen in mehrere Abschnitte unterteilt, die federnd ausgebildet sind. Diese Federwirkung ist erforderlich, um die formschlüssige Verbindung zu lösen und die Nase aus der Nut zu bewegen.

In einer bevorzugten Ausführung der Bohrkrone sind an der Außenseite des inneren Steckelementes drei oder mehr Stiftelemente angeordnet und das äußere Steckelement weist drei oder mehr schlitzförmige Ausnehmungen auf, wobei die Anzahl der Ausnehmungen grösser oder gleich der Anzahl der Stiftelemente ist. Bei der erfindungsgemäßen Bohrkrone erfolgt die Drehmomentübertragung über die Stiftelemente auf das äußere Steckelement. Dabei sind die Stiftelemente besonders bevorzugt gleichmäßig um die Drehachse der Bohrkrone verteilt. Durch die gleichmäßige Verteilung der Stiftelemente ist keine Zuordnung zwischen den Stiftelementen und den schlitzförmigen Ausnehmungen gegeben und ein Stiftelement kann in jede schlitzförmige Ausnehmung eingeführt werden. Damit die Abschnitte des äußeren Steckelementes, die zwischen den schlitzförmigen Ausnehmungen entstehen, eine ausreichende Federwirkung zum Öffnen der formschlüssigen Verbindung besitzen, sind mindestens drei schlitzförmige Ausnehmungen erforderlich.

Erfindungsgemäß ist die Nase an der Außenseite des inneren Steckelementes angeordnet und das äußere Steckelement weist die Nut auf. Durch die Anordnung der Nut im äußeren Steckelement kann die Federwirkung erhöht werden. Diese Ausführung hat den Vorteil, dass die Nase, die als Versteifungselement wirken kann, am inneren Steckelement angeordnet ist und die Stabilität des inneren Steckelementes verbessert.

Besonders bevorzugt ist die Nase in axialer Richtung, d.h. in einer Richtung parallel zur Längsachse des Bohrschaftes und parallel zur Drehachse der Bohrkrone, zwischen den Stiftelementen und dem Bohrschaft angeordnet und die Nut ist in axialer Richtung auf Höhe der schlitzförmigen Ausnehmungen angeordnet. Um den Bohrschaftabschnitt vom Schneidabschnitt zu trennen, wird auf die Stirnfläche des äußeren Steckelementes mit Hilfe eines Werkzeuges in axialer Richtung eine Kraft ausgeübt. Durch die Krafteinwirkung wird der federnde Abschnitt des äußeren Steckelementes ausgelenkt und die formschlüssige Verbindung zwischen Nase und Nut kann gelöst werden. Je grösser der Abstand der Nut zu der Anschlagschulter des äußeren Steckelementes ist, umso grösser ist die Auslenkung des federnden Abschnittes.

Besonders bevorzugt ist die Nut ringförmig ausgebildet und in einer Ebene senkrecht zur Drehachse der Bohrkrone angeordnet. Eine ringförmig ausgebildete Nut, die auf Höhe der schlitzförmigen Ausnehmungen angeordnet ist, unterstützt die Federwirkung der Abschnitte des äußeren Steckelementes zwischen den schlitzförmigen Ausnehmungen.

Bevorzugt ist die axiale Höhe der Nut mindestens 1 mm grösser als die axiale Höhe der Nase. Die Differenz zwischen den axialen Höhen der Nut und Nase wird grösser gewählt als aus Toleranzgründen notwendig wäre. Die Differenz der axialen Höhe kann dazu genutzt werden, die Bohrkronenabschnitte zum Lösen der formschlüssigen Verbindung gegeneinander zu verschieben, so dass der Bediener am äußeren Steckelement ein Werkzeug ansetzen kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform im Rahmen der Ansprüche vorgenommen werden können.

Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A,: B eine erfindungsgemäße Bohrkrone mit einem austauschbaren Schneidabschnitt und einem Bohrschaftabschnitt im nicht-verbundenen Zustand (FIG. 1A) und im verbundenen Zustand (FIG. 1B);
- FIG. 2: den Bohrschaftabschnitt der in FIG. 1 gezeigten Bohrkrone in einem Längsschnitt entlang der Schnittebene A-A in FIG. 1A;
- FIG. 3: den Schneidabschnitt der in FIG. 1 gezeigten Bohrkrone in einem Längsschnitt entlang der Schnittebene B-B in FIG. 1A (FIG. 3A); und
- FIG. 4: den Schneidabschnitt und den Bohrschaftabschnitt im verbundenen Zustand in einem Längsschnitt entlang der Schnittebene C-C in FIG. 1B.

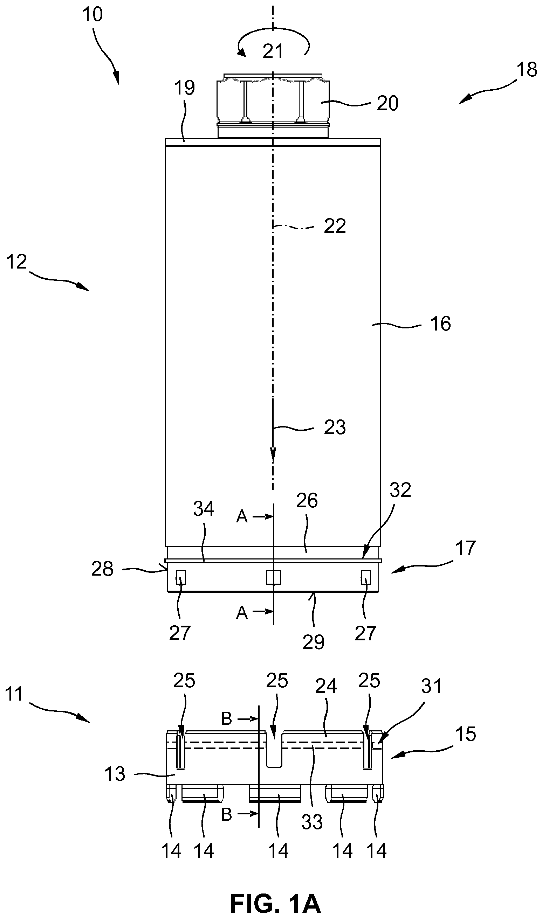

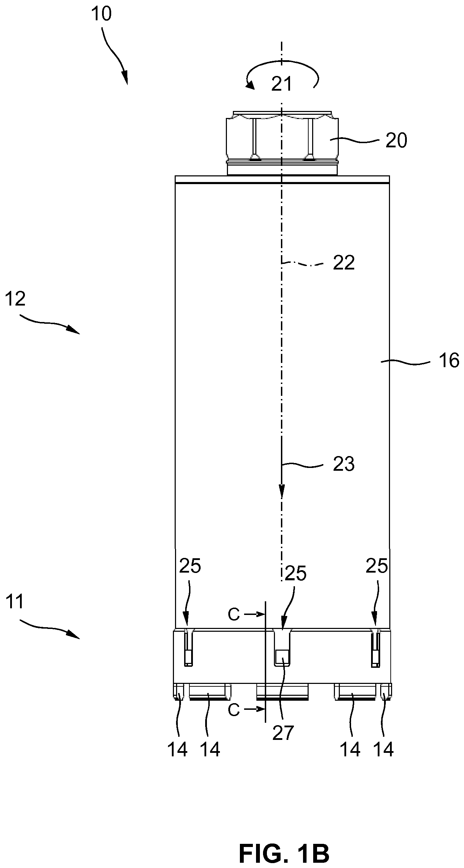

**FIGN. 1A****, B** zeigen eine erfindungsgemäße Bohrkrone **10** mit einem Schneidabschnitt **11,** der über eine lösbare Verbindung mit einem Bohrschaftabschnitt **12** verbunden ist. Dabei zeigt FIG. 1A den Schneidabschnitt 11 und den Bohrschaftabschnitt 12 im nicht-verbundenen Zustand mit geöffneter Verbindung und FIG. 1B den Schneidabschnitt 11 und den Bohrschaftabschnitt 12 im verbundenen Zustand mit geschlossener Verbindung.

Der Schneidabschnitt 11 umfasst einen Ringabschnitt **13,** der an einem, dem Bohrschaftabschnitt 12 abgewandten Ende mit mehreren Schneidelementen **14** verbunden ist und an einem, dem Bohrschaftabschnitt 12 zugewandten Ende eine erste Verbindungseinrichtung **15** aufweist. Die Schneidelemente 14 sind mit dem Ringabschnitt 13 verschweißt, verlötet, verschraubt oder in einer anderen geeigneten Befestigungsart am Ringabschnitt 13 befestigt. Der Schneidabschnitt 11 kann anstatt mehrerer Schneidelemente 14 auch ein einzelnes, als Schneidhülse ausgebildetes, Schneidelement aufweisen, das mit dem Ringabschnitt 13 verbunden ist.

Der Bohrschaftabschnitt 12 umfasst einen zylinderförmigen Bohrschaft **16,** der an einem, dem Schneidabschnitt 11 zugewandten Ende eine zweite Verbindungseinrichtung **17** aufweist und an einem, dem Schneidabschnitt 11 abgewandten, Ende mit einem Aufnahmeabschnitt **18** verbunden ist. Der Aufnahmeabschnitt 18 umfasst einen Deckel **19** und ein Einsteckende **20.** Die Bohrkrone 10 wird über das Einsteckende 20 in der Werkzeugaufnahme eines Bohrgerätes befestigt. Im Bohrbetrieb wird die Bohrkrone 10 vom Bohrgerät in einer Drehrichtung **21** um eine Drehachse **22** angetrieben und in einer Bohrrichtung **23** parallel zur Drehachse 22 in den zu bearbeitenden Untergrund bewegt. Die Drehachse 22 verläuft koaxial zu einer Längsachse des Bohrschaftes 16 und zu einer Längsachse des Ringabschnittes 13. Die Bohrkrone 10 weist senkrecht zur Drehachse 22 einen kreisförmigen Querschnitt auf, alternativ können erfindungsgemäße Bohrkronen andere geeignete Querschnitte, wie beispielsweise einen mehreckigen Querschnitt, aufweisen.

Die erste Verbindungseinrichtung 15 umfasst ein erstes Steckelement **24,** das als äußeres Steckelement ausgebildet ist, und sechs schlitzförmige Ausnehmungen **25,** die im äußeren Steckelement vorgesehen sind. Die zweite Verbindungseinrichtung 17 umfasst ein zweites Steckelement **26,** das als inneres Steckelement ausgebildet ist, und sechs Stiftelemente **27,** die an einer Außenseite **28** des inneren Steckelementes 26 befestigt und radial nach außen gerichtet sind. Im verbundenen Zustand, der in FIG. 1B dargestellt ist, bilden die erste und zweite Verbindungseinrichtung 15, 17 eine lösbare Verbindung zwischen dem Schneidabschnitt 11 und dem Bohrschaftabschnitt 12. Mittels der ersten und zweiten Verbindungseinrichtung 15, 17 erfolgen die Kraftübertragung und Drehmomentübertragung vom Bohrschaftabschnitt 12 auf den Schneidabschnitt 11.

Die Stiftelemente 27 und schlitzförmigen Ausnehmungen 25 sind gleichmäßig um die Drehachse 22 verteilt angeordnet. Durch die gleichmäßige Verteilung ist keine Zuordnung zwischen den Stiftelementen 27 und den schlitzförmigen Ausnehmungen 25 gegeben und ein Stiftelement 27 kann in jede schlitzförmige Ausnehmung 25 eingeführt werden. Die schlitzförmigen Ausnehmungen 25 bestehen aus einem Längsschlitz, dessen Längsachse parallel zur Drehachse 22 angeordnet ist. Diese Form der schlitzförmigen Ausnehmung wird auch als I-Schlitz bezeichnet. Die Stiftelemente 27 sind in der gezeigten Ausführungsform rechteckförmig ausgebildet. Alternativ können die Stiftelemente 27 kreisförmig, trapezförmig oder in einer anderen geeigneten Querschnittsform ausgebildet sein.

Um die Kraft- und Drehmomentübertragung zu unterstützen und eine Überlastung einzelner Bereiche zu verhindern, sollte der Kontaktbereich, über den die Kraft- und Drehmomentübertragung vom Bohrschaftabschnitt 12 auf den Schneidabschnitt 11 erfolgen, nicht punkt- oder linienförmig, sondern flächenförmig sein. Der Kontaktbereich kann über die Querschnittsform der Stiftelemente 27 angepasst werden. Die Drehmomentübertragung erfolgt in jedem Fall über die Stiftelemente 27, die bei einer Drehung des Bohrschaftabschnittes 12 an eine Seitenwand des I-Schlitzes 25 anschlagen. Die Kraftübertragung kann ebenfalls über die Stiftelemente 27 erfolgen oder über eine Anschlagschulter, an die eine Stirnfläche **29** des inneren Steckelementes 26 anschlägt.

Der Schneidabschnitt 11 weist neben der ersten Verbindungseinrichtung 15 eine dritte Verbindungseinrichtung **31** auf, die von der ersten Verbindungseinrichtung 15 verschieden ist, und der Bohrschaftabschnitt 12 weist neben der zweiten Verbindungseinrichtung 17 eine vierte Verbindungseinrichtung **32** auf, die von der zweiten Verbindungseinrichtung 17 verschieden ist. Im verbundenen Zustand der Bohrkrone 10 bilden die dritte und vierte Verbindungseinrichtung 31, 32 in axialer Richtung eine formschlüssige Verbindung zwischen dem Schneidabschnitt 11 und dem Bohrschaftabschnitt 12. Der Schneidabschnitt 11 ist mittels der dritten und vierten Verbindungseinrichtung 31, 32 gegen ein Abziehen des Bohrschaftabschnittes 12 vom Schneidabschnitt 11 gesichert.

Die dritte Verbindungseinrichtung 31 umfasst eine Nut **33,** die an einer Innenseite des äußeren Steckelementes 24 angeordnet ist. Die vierte Verbindungseinrichtung 32 umfasst eine Nase **34,** die an der Außenseite 28 des inneren Steckelementes 26 angeordnet ist und sich radial nach außen erstreckt.

Der Schneidabschnitt 11 lässt sich vom Bediener einfach und schnell mit dem Bohrschaftabschnitt 12 verbinden. Dazu wird der Schneidabschnitt 11 mit dem äußeren Steckelement 24 so auf das innere Steckelement 26 des Bohrschaftabschnittes 12 gesteckt, dass die Stiftelemente 27 in den schlitzförmigen Ausnehmungen 25 angeordnet sind. Der Schneidabschnitt 11 wird solange in axialer Richtung bewegt, bis die Nase 34 in die Nut 33 eingerastet ist.

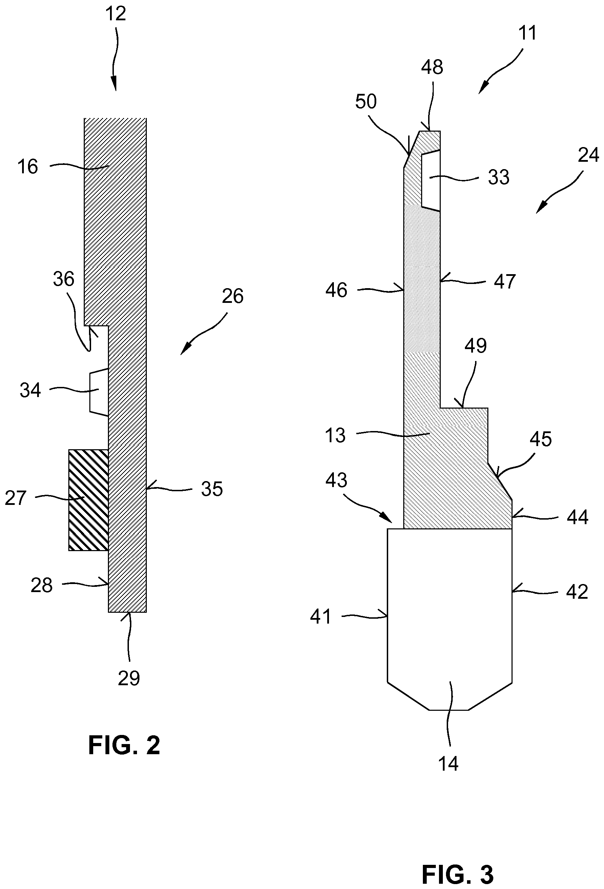

**FIG. 2** zeigt einen Ausschnitt des Bohrschaftabschnittes 12 der erfindungsgemäßen Bohrkrone 10 in einem Längsschnitt entlang der Schnittebene A-A in FIG. 1A. Der Bohrschaftabschnitt 12 umfasst den zylinderförmigen Bohrschaft 16 und das innere Steckelement 26, die monolithisch ausgebildet sind. Alternativ zur monolithischen Ausbildung kann das innere Steckelement 26 als separates Teil ausgebildet sein und anschließend mit dem Bohrschaft 16 verbunden werden.

Das innere Steckelement 26 umfasst eine äußere Mantelfläche, die der Außenseite 28 entspricht, die Stirnfläche 29 und eine innere Mantelfläche **35,** am Übergang vom Bohrschaft 16 zum inneren Steckelement 26 befindet sich eine ringförmige Anschlagschulter **36.** Auf der Außenseite 28 des inneren Steckelementes 26 sind die Stiftelemente 27 und die Nase 34 angeordnet. Die Stiftelemente 27, die Nase 34 und das innere Steckelement 26 können aus verschiedenen Materialien hergestellt und miteinander verbunden sein oder sie bestehen aus dem gleichen Material, wobei die Stiftelemente 27 und die Nase 34 durch Umformverfahren, wie Prägen oder Durchsetzen, erzeugt werden können.

Die Nase 34 ist in axialer Richtung, d.h. in Bohrrichtung 23, zwischen den Stiftelementen 27 und der Anschlagschulter 36 des inneren Steckelementes 26 angeordnet. Um den Bohrschaftabschnitt 12 vom Schneidabschnitt 11 zu trennen, wird auf die Stirnfläche des äußeren Steckelementes 24 mit Hilfe eines Werkzeuges in axialer Richtung eine Kraft ausgeübt. Durch die Krafteinwirkung wird der federnde Abschnitt des äußeren Steckelementes 24 ausgelenkt und die formschlüssige Verbindung zwischen Nase 34 und Nut 33 kann gelöst werden. Je grösser der Abstand der Nase 33 zu der Stirnfläche 29 des inneren Steckelementes 26 ist, umso grösser ist die Auslenkung des äußeren Steckelementes 24.

**FIG. 3** zeigt den Schneidabschnitt 11 der erfindungsgemäßen Bohrkrone 10 in einem Längsschnitt entlang der Schnittebene B-B in FIG. 1A. Der Schneidabschnitt 11 umfasst den Ringabschnitt 13, die Schneidelemente 14 und das äußere Steckelement 24. Der Ringabschnitt 13 und das äußere Steckelement 24 sind in der gezeigten Ausführung monolithisch ausgebildet. Alternativ zur monolithischen Ausbildung kann das äußere Steckelement 24 als separates Teil ausgebildet sein und anschließend mit dem Ringabschnitt 13 verbunden werden.

Die Schneidelemente 14 sind in einer Ebene senkrecht zur Drehachse 22 ringförmig um den Ringabschnitt 13 angeordnet und weisen jeweils eine Außenkante **41** und eine Innenkante **42** auf. Der Ringabschnitt 13 schließt bündig an die Innenkante 42 des Schneidelementes 14 an und weist gegenüber der Außenkante 41 des Schneidelementes 14 einen Rücksprung **43** auf. Die Außenkanten 41 der Schneidelemente 14 bilden einen Außenkreis mit einem Außendurchmesser und die Innenkanten einen Innenkreis mit einem Innendurchmesser. Die Schneidelemente 14 erzeugen im Untergrund ein Bohrloch mit einem Bohrlochdurchmesser, der dem Außendurchmesser der Schneidelemente 14 entspricht. Im Inneren der Bohrkrone 10 entsteht ein Bohrkern mit einem Bohrkerndurchmesser, der dem Innendurchmesser der Schneidelemente entspricht.

Der Ringabschnitt 13 umfasst an der Innenseite einen Führungsabschnitt **44** und einen Kernentfernungsabschnitt **45.** Der Kernentfernungsabschnitt 45 weist eine schräge Fläche auf, die das Entfernen des Bohrkerns unterstützt. Der Führungsabschnitt 44 schließt bündig an das Schneidelement 14 an und bildet beim Bohren eine Führung für die Schneidelemente 14. Alternativ zur Führung an der Innenseite der Bohrkrone 10 kann der Führungsabschnitt an der Außenseite oder an der Außen- und Innenseite angeordnet sein.

Das äußere Steckelement 24 umfasst eine äußere Mantelfläche **46,** eine innere Mantelfläche **47** und eine Stirnfläche **48.** Am Übergang vom Ringabschnitt 13 zum äußeren Steckelement 24 befindet sich eine ringförmige Anschlagschulter **49.** Das äußere Steckelement 24 weist zusätzlich eine schräge Außenfläche **50** auf, deren Durchmesser in Richtung der Schneidelemente 14 zunimmt.

Die Nut 33 ist auf der inneren Mantelfläche 47 des äußeren Steckelementes 24 angeordnet. Durch die Anordnung der Nut 33 im äußeren Steckelement 24 kann die Federwirkung des äußeren Steckelementes 24 erhöht werden. Die Nut 33 ist ringförmig ausgebildet und in einer Ebene senkrecht zur Drehachse 22 der Bohrkrone 10 angeordnet. Eine ringförmig ausgebildete Nut, die in axialer Richtung auf Höhe der schlitzförmigen Ausnehmungen 25 angeordnet ist, unterstützt die Federwirkung der Abschnitte des äußeren Steckelementes 24 zwischen den schlitzförmigen Ausnehmungen 25.

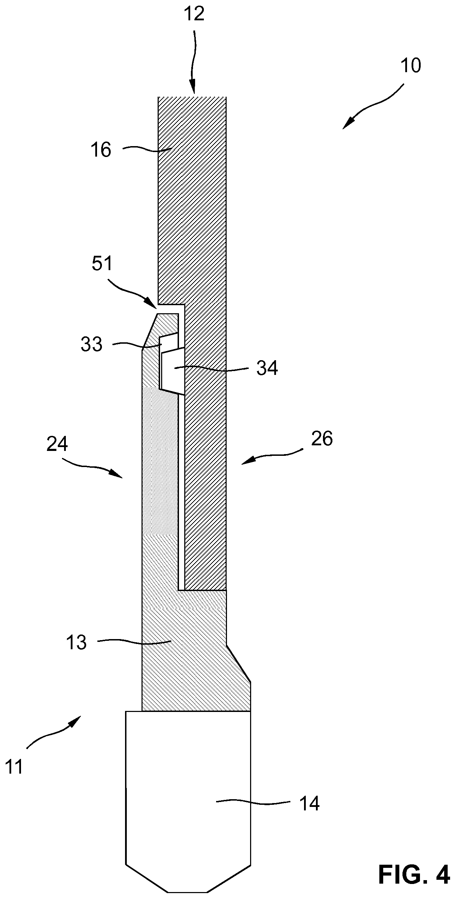

**FIG. 4** zeigt die erfindungsgemäße Bohrkrone 10 mit dem Schneidabschnitt 11 und dem Bohrschaftabschnitt 12, die über die lösbare Verbindung verbunden sind, in einem Längsschnitt entlang der Schnittebene C-C in FIG. 1B.

Im verbundenen Zustand liegt der Bohrschaftabschnitt 12 mit der Stirnfläche 29 an der Anschlagschulter 49 des Schneidabschnittes 11 an. Die Länge des inneren Steckelementes 26 ist grösser als die Länge des äußeren Steckelementes 24, so dass sich zwischen der Stirnfläche 48 des äußeren Steckelementes 24 und der Anschlagschulter 32 des inneren Steckelementes 26 ein axialer Spalt **51** bildet. Durch die Längendifferenz zwischen dem inneren Steckelement 26 und dem äußeren Steckelement 24 kann sichergestellt werden, dass die Stirnfläche 29 des inneren Steckelementes 26 an der Anschlagschulter 49 des äußeren Steckelementes 24 anliegt und beim Bohren eine definierte Kraftübertragung vom Bohrschaftabschnitt 12 auf den Schneidabschnitt 11 erfolgt.

Die Haltekraft, die die Nase 34 und Nut 33 aushalten, kann über die Geometrie der Nase 34 und Nut 33 angepasst werden. Das Einrasten der Nase 34 in die Nut 33 soll für den Bediener möglichst komfortabel sein, eine schräge Fläche erleichtert das Einrasten. Als Geometrieparameter zum Einstellen der Haltekraft eignen sich beispielsweise die radiale Höhe der Nase 34, d.h. die Höhe in radialer Richtung, die Kontaktfläche zwischen der Nase 34 und dem inneren Steckelement und der Neigungswinkel.

Die axiale Höhe der Nut 33, d.h. die Höhe der Nut 33 in axialer Richtung, ist mindestens 1 mm grösser als die axiale Höhe der Nase 34. Die Differenz zwischen den axialen Höhen der Nut 33 und Nase 34 wird grösser gewählt als aus Toleranzgründen notwendig wäre. Die Differenz der axialen Höhe kann dazu genutzt werden, die Bohrkronenabschnitte 11, 12 zum Lösen der formschlüssigen Verbindung gegeneinander zu verschieben, so dass der Bediener den axialen Spalt 51 vergrößern und im axialen Spalt 51 ein Werkzeug ansetzen kann.

## Patentansprüche

1. Bohrkrone (10), die um eine Drehachse (22) drehbar ist, aufweisend:
▪ einen, als Schneidabschnitt (11) ausgebildeten, ersten Bohrkronenabschnitt mit einem Ringabschnitt (13), der an einem Ende mit einem oder mehreren Schneidelementen (14) verbunden ist und an einem anderen Ende eine erste Verbindungseinrichtung (15) aufweist, und
▪ einen, als Bohrschaftabschnitt (12) ausgebildeten, zweiten Bohrkronenabschnitt mit einem zylinderförmigen Bohrschaft (16), der an einem, dem Schneidabschnitt (11) zugewandten Ende eine zweite Verbindungseinrichtung (17) aufweist,
wobei die erste und zweite Verbindungseinrichtung (15, 17) im verbundenen Zustand eine lösbare Verbindung zwischen dem Schneidabschnitt (11) und dem Bohrschaftabschnitt (12) bilden und mittels der ersten und zweiten Verbindungseinrichtung (15, 17) eine Kraftübertragung und Drehmomentübertragung vom Bohrschaftabschnitt (12) auf den Schneidabschnitt (11) erfolgt, wobei der Schneidabschnitt (11) eine, von der ersten Verbindungseinrichtung (15) verschiedene, dritte Verbindungseinrichtung (31) aufweist, der Bohrschaftabschnitt (12) eine, von der zweiten Verbindungseinrichtung (17) verschiedene, vierte Verbindungseinrichtung (32) aufweist, die dritte und vierte Verbindungseinrichtung (31, 32) im verbundenen Zustand in einer axialen Richtung parallel zur Drehachse (22) eine formschlüssige Verbindung zwischen dem Schneidabschnitt (11) und dem Bohrschaftabschnitt (12) bilden und die dritte und vierte Verbindungseinrichtung (31, 32) eine Nase (34) und eine Nut (33) aufweisen, wobei die Nase (34) in die Nut (33) bewegbar ist,
wobei der erste und zweite Bohrkronenabschnitt (11, 12) ein inneres Steckelement (26) und ein äußeres Steckelement (24) umfassen, das innere und äußere Steckelement (26, 24) im verbundenen Zustand eine Steckverbindung bilden und das äußere Steckelement (24) am Schneidabschnitt (11) und das innere Steckelement (26) am Bohrschaftabschnitt (12) vorgesehen sind,
wobei die erste und zweite Verbindungseinrichtung (15, 17) mindestens ein Stiftelement (27) und mindestens eine schlitzförmige Ausnehmung (25) aufweisen, wobei das Stiftelement (27) in die schlitzförmige Ausnehmung (25) bewegbar ist,
**dadurch gekennzeichnet, dass**
das mindestens eine Stiftelement (27) an einer Außenseite (28) des inneren Steckelementes (26) angeordnet ist, das äußere Steckelement (24) die mindestens eine schlitzförmige Ausnehmung (25) aufweist, die mindestens eine schlitzförmige Ausnehmung (25) das äußere Steckelement (24) in einer radialen Richtung senkrecht zur Drehachse (22) vollständig durchdringt, eine Stirnfläche (29) des inneren Steckelementes (26) im verbundenen Zustand an einer Anschlagschulter (49) des äußeren Steckelementes (24) anliegt, wobei die Anschlagschulter (49) am Übergang zwischen dem Ringabschnitt (13) und dem äußeren Steckelement (24) angeordnet ist, und die Nase (34) an der Außenseite (28) des inneren Steckelementes (26) angeordnet ist und das äußere Steckelement (24) die Nut (33) aufweist.

2. Bohrkrone nach Anspruch 1, **dadurch gekennzeichnet, dass** an der Außenseite (28) des inneren Steckelementes (26) drei oder mehr Stiftelemente (27) angeordnet sind und das äußere Steckelement (24) drei oder mehr schlitzförmige Ausnehmungen (25) aufweist, wobei die Anzahl der schlitzförmigen Ausnehmungen (25) grösser oder gleich der Anzahl der Stiftelemente (27) ist.

3. Bohrkrone nach einem der Ansprüche 1 bis 2, **dadurch gekennzeichnet, dass** die Nase (34) in axialer Richtung zwischen den Stiftelementen (27) und dem Bohrschaft (16) angeordnet ist und die Nut (33) in axialer Richtung auf Höhe der schlitzförmigen Ausnehmungen (25) angeordnet ist.

4. Bohrkrone nach Anspruch 3, **dadurch gekennzeichnet, dass** die Nut (33) ringförmig ausgebildet ist und in einer Ebene senkrecht zur Drehachse (22) angeordnet ist.

5. Bohrkrone nach einem der Ansprüche 1 bis 4, **dadurch gekennzeichnet, dass** die axiale Höhe der Nut (33) mindestens 1 mm grösser ist als die axiale Höhe der Nase (34).

## Claims

1. Drill bit (10), which is rotatable around an axis of rotation (22), having:
▪ a first drill bit portion, configured as a cutting portion (11), with a ring portion (13), which is connected to one or several cutting elements (14) at one end and has a first connection device (15) at another end, and
▪ a second drill bit portion, configured as a drill shaft portion (12), with a cylindrical drill shaft (16), which has a second connection device (17) at an end facing towards the cutting portion (11),
in which in the connected state the first and second connection device (15, 17) form a detachable connection between the cutting portion (11) and the drill shaft portion (12) and by means of the first and second connection device (15, 17) there is power transmission and torque transmission from the drill shaft portion (12) to the cutting portion (11),
in which the cutting portion (11) has a third connection device (31) that is different from the first connection device (15), the drill shaft portion (12) has a fourth connection device (32) that is different from the second connection device (17), in the connected state the third and fourth connection device (31, 32) form a form locking connection between the cutting portion (11) and the drill shaft portion (12) in an axial direction parallel to the axis of rotation (22) and the third and fourth connection device (31, 32) have a projection (34) and a groove (33), in which the projection (34) may be moved into the groove (33),
in which the first and second drill bit portion (11, 12) comprise an inner plug element (26) and an outer plug element (24), in the connected state the inner and outer plug element (26, 24) form a plug connection and the outer plug element (24) is provided on the cutting portion (11) and the inner plug element (26) on the drill shaft portion (12), in which the first and second connection device (15, 17) have at least one pin element (27) and at least one slit-shaped recess (25), in which the pin element (27) may be moved into the slit-shaped recess (25),
**characterised in that**
the at least one pin element (27) is arranged on an outside (28) of the inner plug element (26), the outer plug element (24) has at least one slit-shaped recess (25), the at least one slit-shaped recess completely penetrates the outer plug element (24) in a radial direction perpendicular to the axis of rotation (22), in the connected state a face (29) of the inner plug element (26) lies on a stop shoulder (49) of the outer plug element (24), in which the stop shoulder (49) is arranged at the transition between the ring portion (13) and the outer plug element (24), and the projection (34) is arranged on the outside (28) of the inner plug element (26) and the outer plug element (24) has the groove (33).

2. Drill bit according to claim 1, **characterised in that** three or more pin elements (27) are arranged on the outside (28) of the inner plug element (26) and the outer plug element (24) has three or more slit-shaped recesses (25), in which the number of slit-shaped recesses (25) is larger or the same as the number of pin elements (27).

3. Drill bit according to one of claims 1 to 2, **characterised in that** the projection (34) is arranged between the pin elements (27) and the drill shaft (16) and the groove (33) is arranged at the height of the slit-shaped recesses (25) in the axial direction.

4. Drill bit according to claim 3, **characterised in that** the groove (33) is made ring-shaped and is arranged in a plane perpendicular to the axis of rotation (22).

5. Drill bit according to one of claims 1 to 4, **characterised in that** the axial height of the groove (33) is at least 1 mm larger than the axial height of the projection (34).

## Revendications

1. Trépan (10) qui peut tourner autour d'un axe de rotation (22), comportant :
• une première partie de trépan formée comme une partie tranchante (11) avec une partie annulaire (13) qui est reliée, à une extrémité, à un ou plusieurs éléments tranchants (14) et qui comporte, à une autre extrémité, un premier dispositif d'assemblage (15), et
• une seconde partie de trépan formée comme une partie d'arbre de trépan (12) avec un arbre de trépan cylindrique (16) qui comporte un deuxième dispositif d'assemblage (17) à une extrémité dirigée vers la partie tranchante (11),
dans lequel les premier et deuxième dispositifs d'assemblage (15, 17) forment, à l'état assemblé, un assemblage détachable entre la partie tranchante (11) et la partie d'arbre de trépan (12), et une transmission de force et une transmission de couple à la partie tranchante (11) ont lieu à partir de la partie d'arbre de trépan (12) au moyen des premier et deuxième dispositifs d'assemblage (15, 17),
dans lequel la partie tranchante (11) comporte un troisième dispositif d'assemblage (31), différent du premier dispositif d'assemblage (15), la partie d'arbre de trépan (12) comporte un quatrième dispositif d'assemblage (32), différent du deuxième dispositif d'assemblage (17), les troisième et quatrième dispositifs d'assemblage (31, 32), à l'état assemblé, forment un assemblage par complémentarité de formes entre la partie tranchante (11) et la partie d'arbre de trépan (12) dans une direction axiale parallèle à l'axe de rotation (22), et les troisième et quatrième dispositifs d'assemblage (31, 32) comportent une languette (34) et une rainure (33), dans lequel la languette (34) est mobile dans la rainure (33),
dans lequel les première et seconde parties de trépan (11, 12) comprennent un élément enfichable intérieur (26) et un élément enfichable extérieur (24), les éléments enfichables intérieur et extérieur (26, 24) forment, à l'état assemblé, un assemblage par enfichage, et l'élément enfichable extérieur (24) est prévu sur la partie tranchante (11) et l'élément enfichable intérieur (26) est prévu sur la partie d'arbre de trépan (12),
dans lequel les premier et deuxième dispositifs d'assemblage (15, 17) comportent au moins un élément de tenon (27) et au moins un logement en forme de fente (25), dans lequel l'élément de tenon (27) est mobile dans le logement en forme de fente (25),
**caractérisé en ce que**
le au moins un élément de tenon (27) est agencé sur un côté extérieur (28) de l'élément enfichable intérieur (26), l'élément enfichable extérieur (24) comporte le au moins un logement en forme de fente (25), le au moins un logement en forme de fente (25) pénètre entièrement dans l'élément enfichable extérieur (24) dans une direction radiale perpendiculaire à l'axe de rotation (22), une surface frontale (29) de l'élément enfichable intérieur (26) est en butée, à l'état assemblé, contre un épaulement de butée (49) de l'élément enfichable extérieur (24), dans lequel l'épaulement de butée (49) est agencé au niveau de la transition entre la partie annulaire (13) et l'élément enfichable extérieur (24), et la languette (34) est agencée sur le côté extérieur (28) de l'élément enfichable intérieur (26) et l'élément enfichable extérieur (24) comporte la rainure (33).

2. Trépan selon la revendication 1, **caractérisé en ce que** sur le côté extérieur (28) de l'élément enfichable intérieur (26) sont agencés trois ou plus de trois éléments de tenon (27) et l'élément enfichable extérieur (24) comporte trois ou plus de trois logements en forme de fente (25), dans lequel le nombre des logements en forme de fente (25) est supérieur ou égal au nombre des éléments de tenon (27).

3. Trépan selon l'une des revendications 1 à 2, **caractérisé en ce que** la languette (34) est agencée dans une direction axiale entre les éléments de tenon (27) et l'arbre de trépan (16), et la rainure (33) est agencée dans la direction axiale au niveau des logements en forme de fentes (25).

4. Trépan selon la revendication 3, **caractérisé en ce que** la rainure (33) est conçue de manière annulaire et est agencée dans un plan perpendiculaire à l'axe de rotation (22).

5. Trépan selon l'une des revendications 1 à 4, **caractérisé en ce que** la hauteur axiale de la rainure (33) est au moins 1 mm plus grande que la hauteur axiale de la languette (34).
